# FASCICULE DE BREVET EUROPEEN

(11) **EP 2 545 781 B1**
(45) Date de publication et mention de la délivrance du brevet: **16.09.2015**
(21) Numéro de dépôt: 12305845.5
(22) Date de dépôt: 13.07.2012
(51) Int. Cl.: A22C 21/00

(54) **Dispositif de transfert d'une volaille entre une ligne d'abattage/eviscération et une chaine de bridage**
Vorrichtung zum Transfer von Geflügel zwischen einer Schlacht-/Ausweidelinie und einem Einspannfließband
Device for the transfer of poultry between a slaughter/evisceration line and a clamping chain

(30) Priorité: 13.07.2011 FR 1156388
(43) Date de publication de la demande: 16.01.2013
(73) Titulaire: Emsens Antoine, 42490 Fraisses (FR)
(72) Inventeur: Delobel, Jean-Charles, 42650 Saint Jean Bonnefonds (FR); Paya, Denis, 42380 Perigneux (FR)
(74) Mandataire: Thivillier, Patrick

(56) Documents cités:
- EP-A1- 0 413 629
- EP-A1- 0 577 175
- WO-A1-2011/047487
- FR-A1- 2 940 596

## Description

L'invention se rattache au secteur technique du bridage industriel des volailles.

Plus particulièrement, l'invention concerne le transfert des volailles entre une ligne d'abattage et d'éviscération et une chaine de bridage, et plus communément d'une ligne en fonctionnement continu, à une ligne en fonctionnement discontinu.

Différentes solutions techniques ont été proposées pour assurer le bridage automatique d'une volaille. Des installations permettant le bridage industriel des volailles ressortent par exemple de l'enseignement des brevets EP 0 413 629, FR 28476123, et FR 2902606.

Selon l'état antérieur de la technique, on a proposé également de réaliser une chaine de bridage en continu de volailles qui s'intègre parfaitement avec une ligne d'abattage/éviscération avec, pour objectif, outre les avantages liés à un bridage automatique, d'augmenter la productivité et de pouvoir brider des volailles de différents calibres. Une telle solution ressort de l'enseignement du brevet FR 2940596, appartenant au demandeur

Selon l'enseignement de ce brevet, les volailles sont transférées depuis une ligne d'abattage/éviscération sur une chaine de bridage déplaçable linéairement. Les volailles transférées sont accrochées en position verticale au niveau des tarses sur des organes support assujettis à un convoyeur que présente la chaine de bridage. Au fur et à mesure du déplacement linéaire du convoyeur, les volailles sont relevées en position sensiblement horizontale puis soumises à différentes opérations afin de rabattre les ailes et exercer un effort de compression longitudinale à partir du bréchet. Le bridage en tant que tel est effectué au moyen d'une boucle élastique qui est assujettie à des moyens pour être conformée en huit, afin d'être mise en place autour de la volaille.

Toujours selon l'enseignement de ce brevet, afin d'intégrer l'installation de bridage à une ligne d'abattage éviscération pour assurer une continuité dans la chaine de production depuis l'abattage jusqu'à l'évacuation des volailles bridées, un élément préhenseur, apte à saisir séparément chacune des volailles accrochées à la ligne d'abattage et d'éviscération, est assujetti à des moyens de commande pour positionner la volaille considérée sur des moyens d'accrochage que présente des modules assujettis au convoyeur de la chaine de bridage.

A partir de cet état de la technique, le problème que se propose de résoudre l'invention est d'améliorer de manière significative l'accrochage et le maintien des volailles aussi bien au moment du transfert de la ligne d'abattage et d'éviscération à la chaine de bridage que sur la chaine de bridage en tant que telle et ce, quels que soient les tailles et calibres des volailles.

Pour résoudre un tel problème, il a été conçu et mis au point un dispositif de transfert d'une volaille entre une ligne d'abattage/éviscération et une chaine de bridage comprenant :
- au moins un module indépendant équipé de pinces aptes à saisir à la volée et à maintenir fermement au niveau des tarses, une volaille éjectée de la ligne d'abattage/éviscération, ledit module, qui est fixe, étant positionné en relation avec la chaîne de bridage pour mettre en coopération les pinces avec une pluralité d'ensembles assujettis à un convoyeur et comprenant des mâchoires aptes à saisir la volaille au niveau des tarses,
- des moyens aptes à déplacer les pinces en direction des mâchoires, tout en effectuant un mouvement de révolution de 180 ° de chacune des pinces.
- des moyens aptes à ouvrir les pinces pour positionner les tarses de la volaille dans les mâchoires ouvertes de l'ensemble considéré,
- des moyens aptes à refermer les mâchoires pour maintenir fermement les volailles au niveau des tarses, pour les soumettre à d'autres opérations correspondant au bridage en tant que tel de ladite volaille.

Pour résoudre le problème posé d'assurer un accrochage et un maintien sûr et efficace de la volaille au moment du transfert de la ligne d'abattage/éviscération à la chaîne de bridage, chaque pince présente une partie fixe et une partie mobile montée avec capacité de pivotement angulaire en étant assujettie à un vérin pour occuper une position d'ouverture ou de fermeture, par rapport à un tarse correspondant à sa libération ou à son maintien.

Deux pinces sont montées sur une platine commune pour correspondre aux deux tarses d'une volaille, lesdites pinces étant commandées simultanément en synchronisme.

Chaque platine équipée de deux pinces, est montée avec capacité de déplacement en translation et de révolution par rapport à un support fixe en étant assujettie à des organes actionneurs pour être temporairement éloignée, puis rapprochées des mâchoires des ensembles assujettis au convoyeur.

Selon une autre caractéristique, le module indépendant comprend au moins une platine équipée de deux pinces, ledit module est constitué par une structure support conformée pour positionner la ou lesdite(s) platine(s) en regard des ensembles assujettis au convoyeur.

La structure support du module comprend une zone d'appui coopérant avec une partie de la ligne de bridage et une zone d'appui coopérant avec le sol.

Pour résoudre le problème posé d'assurer l'accrochage et le maintien des volaille au niveau de leurs tarses sur le convoyeur de la chaine de bridage, c'est-à-dire après transfert, chaque ensemble assujetti au convoyeur, présente deux mâchoires pour correspondre aux deux tarses d'une volaille, chaque mâchoire présentant un mors fixe et un mors mobile, les deux mors mobiles étant assujetties à des moyens pour les maintenir en position ouverte et à des moyens pour les ramener rapidement en position fermée, après relâchement desdits moyens de maintien en position ouverte.

Les moyens de maintien en position ouverte, sont constitués par un ensemble mobile asservi à un organe actionneur, ledit ensemble étant apte à coopérer avec deux biellettes assujetties, aux mors mobiles des mâchoires, pour provoquer le déplacement angulaire desdites biellettes correspondant à l'ouverture desdits mors et à leur maintien dans cette position à l'encontre de ressorts de rappel.

Pour résoudre le problème posé de refermer très rapidement les mâchoires après transfert des volailles, les moyens pour ramener automatiquement et rapidement les mors mobiles en position fermée, sont constitués par les ressort de rappel montés entre les mors fixes et les mors mobiles de chaque mâchoire, lesdits ressorts étant libérés lorsque l'ensemble mobile est commandé en sens inverse par l'organe actionneur.

Dans une forme de réalisation, l'ensemble mobile fait partie d'un support fixe monté sur une partie de la ligne de bridage, en dehors du convoyeur.

Un tel dispositif peut être utilisé pour une installation de bridage en continu comprenant :
- un convoyeur recevant une pluralité d'ensembles équipés des mâchoires pour le maintien des volailles au niveau de leurs tarses ;
- au moins un ensemble mobile pour la commande en position d'ouverture ou de fermeture des mâchoires ;
- au moins un module de transfert des volailles de la ligne d'abattage/éviscération dans les ensembles équipés des mâchoires ; -
- des moyens de relevage des volailles en position sensiblement horizontale au fur et à mesure du déplacement linéaire du convoyeur ;
- des moyens de compression des volailles ;
- un poste de bridage apte à disposer un lien élastique autour de la volaille en formant un huit ; -
- des moyens d'éjection des volailles bridées.

L'invention est exposée ci-après plus en détail à l'aide des figures des dessins annexés dans lesquels :
- la figure 1 est une vue en perspective d'une forme de réalisation du module de transfert ;
- la figure 2 montre l'adaptation du module au niveau de la chaine de bridage ;

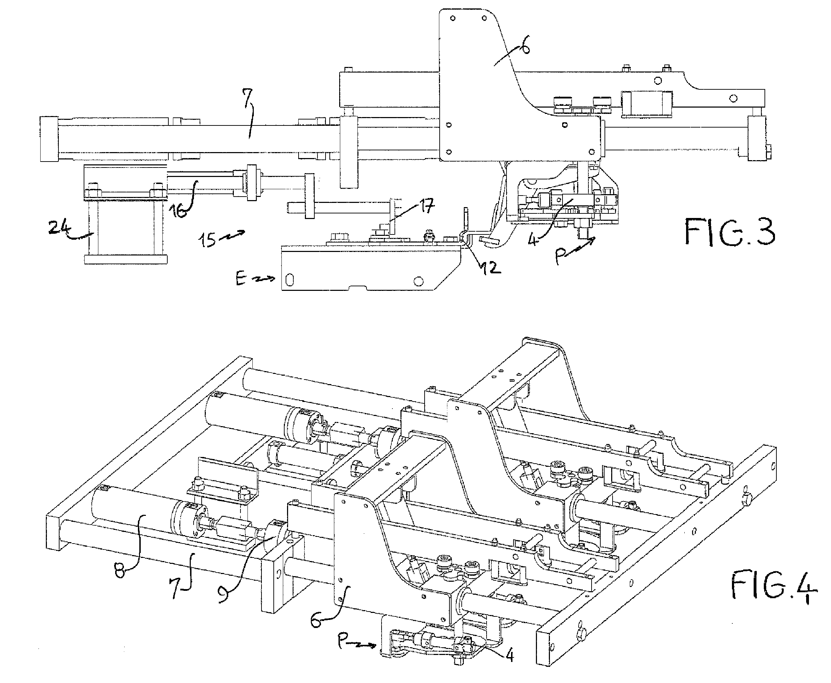

- La figure 3 est une vue de face montrant le positionnement des pinces du module de transfert au niveau d'un ensemble assujetti au convoyeur de la chaine de bridage pour l'accrochage des volailles ;
- la figure 4 est une vue en perspective d'une forme de réalisation d'un ensemble de pinces du module de transfert ;
- la figure 5 est une vue en perspective de la pince en position ouverte ;
- la figure 6 est une vue correspondant à la figure 5 montrant la pince en position fermée ;

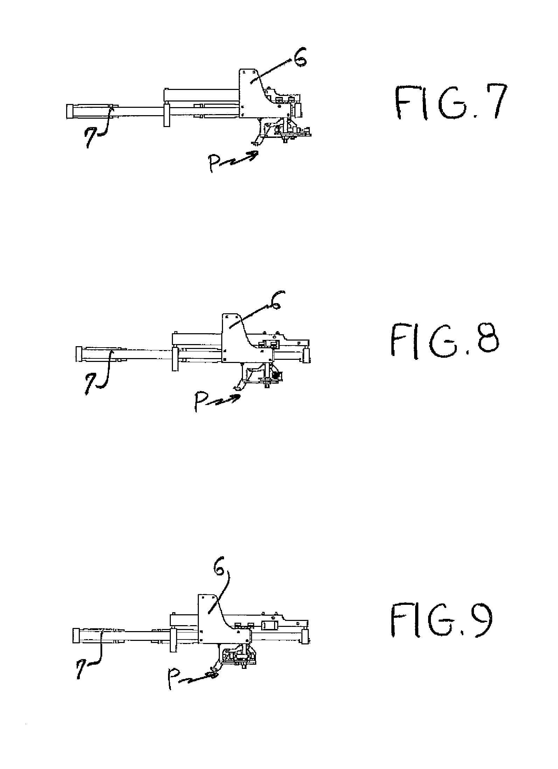

- les figures 7, 8 et 9 montrent les déplacements des ensembles de pinces ;
- la figure 10 est une vue en perspective de l'un des ensembles assujetti au convoyeur de la chaine de bridage et présentant des mâchoires pour le maintien des volailles au niveau des tarses en vue de les soumettre ultérieurement à une opération de bridage en tant que telle ;
- la figure 11 est une vue en perspective de l'ensemble illustré à la figure 10 en relation avec un moyen de commande pour l'ouverture et la fermeture des mâchoires ;

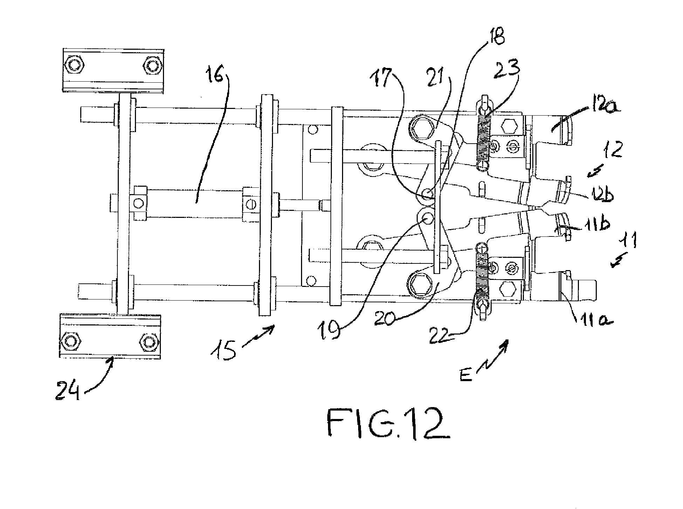

- la figure 12 est une vue de dessus correspondant à la figure 11 ;
- la figure 13 montre la coopération des ensembles de pinces avec un exemple d'une ligne d'abattage/éviscération.

Comme indiqué, le problème que se propose de résoudre l'invention est d'assurer le chargement automatique d'une chaine de bridage depuis la sortie d'une ligne d'abattage/éviscération avec, pour objectif, de parfaitement maintenir les volailles tant au niveau du transfert qu'au niveau du convoyeur que présente, de manière connue, la chaine de bridage. On renvoie par exemple à l'enseignement du brevet précité FR 2940596.

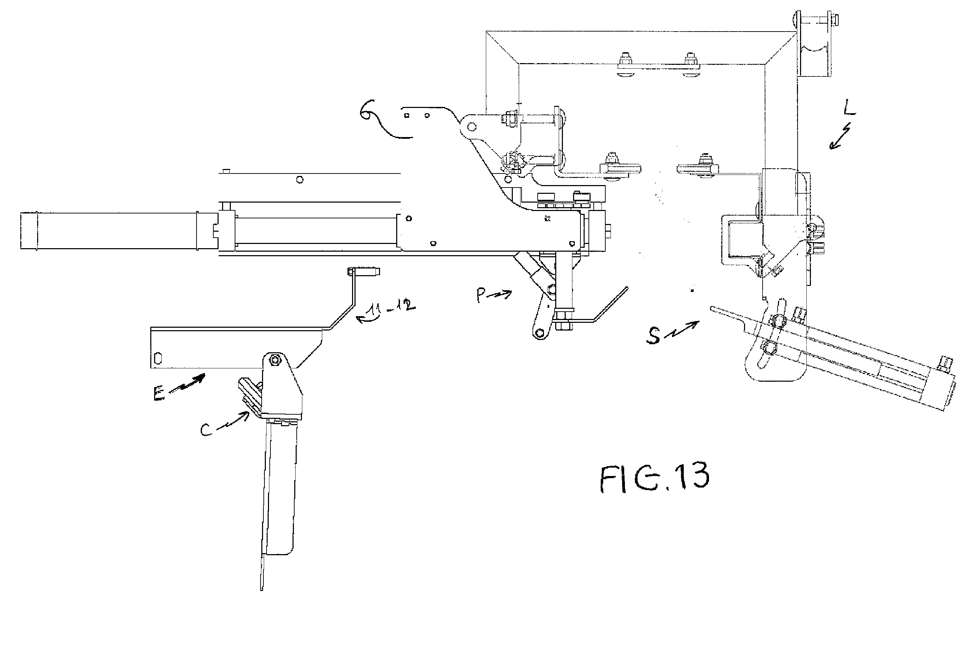

D'une manière parfaitement connue pour un homme du métier, une ligne d'abattage/éviscération (L) est équipée d'un système d'éjection (S) apte à alimenter un poste de bridage manuel. Un vérin agit sur une plaquette qui vient frapper la volaille en dessous des tarses afin de l'éjecter (figure 13).

Selon l'invention, l'objectif est de pouvoir saisir à la volée, la volaille éjectée, puis la transférer sur le convoyeur (C) de la chaine de bridage. La volaille est donc soumise à un mouvement dynamique entre la ligne d'abattage/éviscération (L) et la chaine de bridage.

Après éjection de la volaille par tous moyens connus et appropriés, et afin de la saisir à la volée, le dispositif selon l'invention met en oeuvre un module indépendant désigné dans son ensemble par (M) équipé de pinces (P). Ainsi, chaque pince est apte à saisir à la volée et à maintenir fermement au niveau des tarses, une volaille éjectée de la ligne d'abattage/éviscération. Les pinces, assujetties à des moyens que présente le module (M), sont ensuite mises en coopération avec une pluralité d'ensembles (E) assujettis au convoyeur (C) et comprenant, comme il sera indiqué dans la suite de la description, des mâchoires aptes à saisir la volaille également au niveau des tarses.

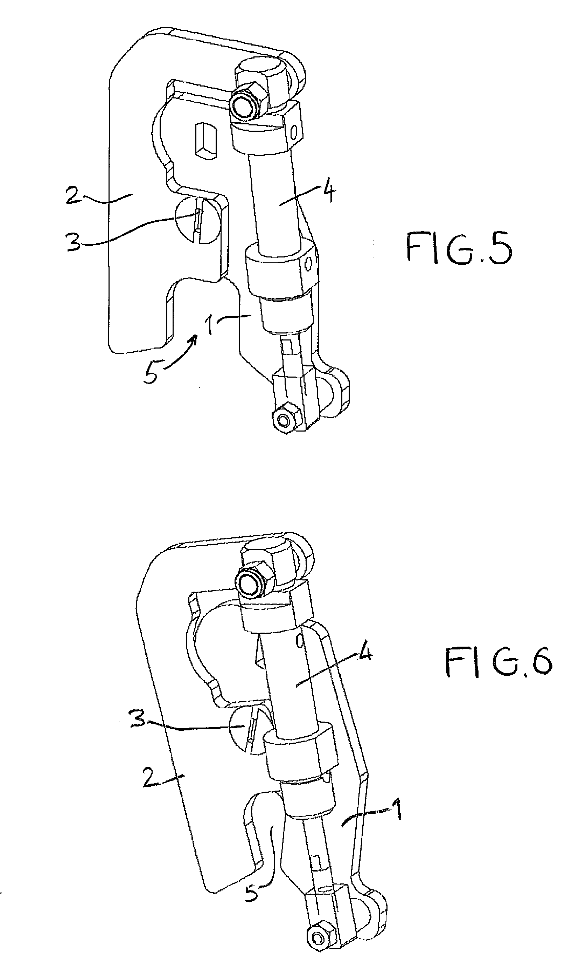

Comme le montrent notamment les figures 5 et 6, chaque pince (P) présente une partie fixe (1) et une partie mobile (2) montée avec capacité de pivotement angulaire par rapport à un axe (3). Les deux parties (1) et (2) sont assujetties à un vérin (4), ou autre organe actionneur, pour occuper une position d'ouverture (figure 5) ou de fermeture (figure 6). Chacune des parties (1) et (2) sont profilées de manière à délimiter, après accouplement, une ouverture (5) pour le positionnement des tarses de la volaille. A la figure 5, les deux parties (1) et (2) sont écartées de sorte que l'ouverture (5) permet l'engagement des tarses tandis qu'à la figure 6, les deux parties (1) et (2) sont rapprochées de sorte que l'ouverture (5) est refermée et correspond à l'accrochage et au maintien des tarses.

Les pinces illustrées aux figures 5 et 6 sont montées sur une platine commune (6) pour correspondre aux deux tarses d'une volaille. Les pinces (P) sont commandées simultanément en synchronisme pour assurer, par l'intermédiaire du vérin (4), soit l'écartement soit le rapprochement des deux parties (1) et (2). Dans ce but, les vérins (4) de chaque pince, sont asservis à un système de commande électrique ou pneumatique.

Chaque platine (6) est équipée des deux pinces (P) avec capacité de déplacement par rapport à un support fixe (7). Par exemple, la platine support (6) est assujettie à deux organes actionneurs du type vérins (8) et (9) pour être éloignée puis être rapprochée du convoyeur recevant la pluralité d'ensembles (E) pour l'accrochage et le maintien des volailles. Une fois que la volaille est accrochée par les tarses dans l'ouverture (5) de chacune des pinces (P), la platine (6) est soumise à un mouvement de translation qui s'effectue en deux temps afin de pouvoir positionner la platine (6) dans une position intermédiaire afin de ne pas gêner le flux de volailles de la ligne d'abattage/d'éviscération. Dans ce but, les deux vérins (8) et (9) sont disposés en alignement l'un derrière l'autre. Pendant ce temps les pinces sont également soumises a un mouvement de révolution de 180°. Ainsi quand la ligne de bridage est en position arrêtée prête à être chargée de la volaille, le deuxième vérin poursuit la translation afin de positionner les pinces au niveau des ensembles d'accrochage du convoyeur.

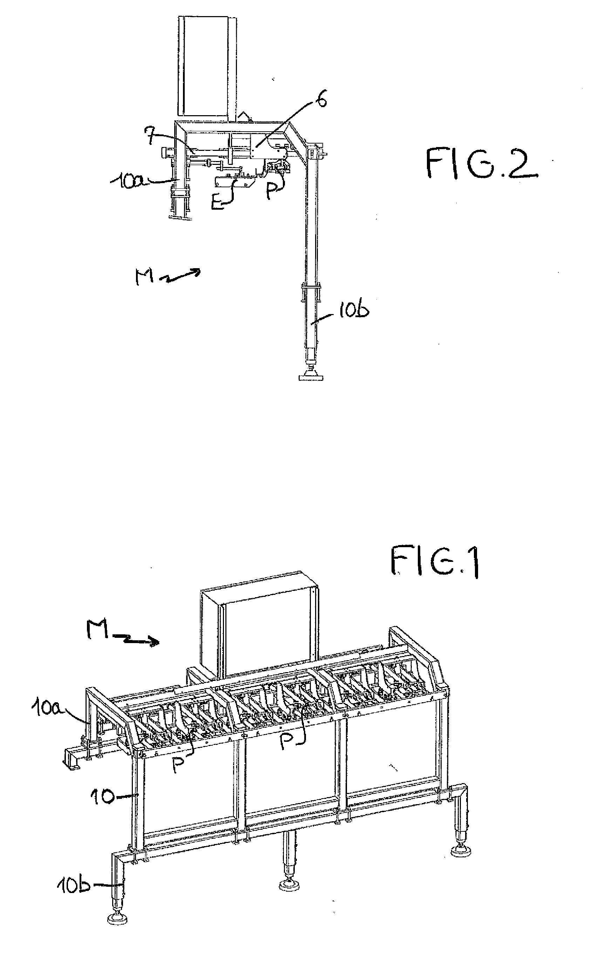

Le module indépendant (M) comprend au moins une, mais avantageusement plusieurs platines (6), équipées de deux pinces (P). Ce module (M) est constitué par une structure (10) conformée pour positionner les platines (6) en regard des ensembles (E) assujettis au convoyeur. Cette structure support (10) comprend une zone d'appui (10a) coopérant avec une partie de la ligne de bridage et une zone d'appui (10b) coopérant avec le sol (figures 1 et 2).

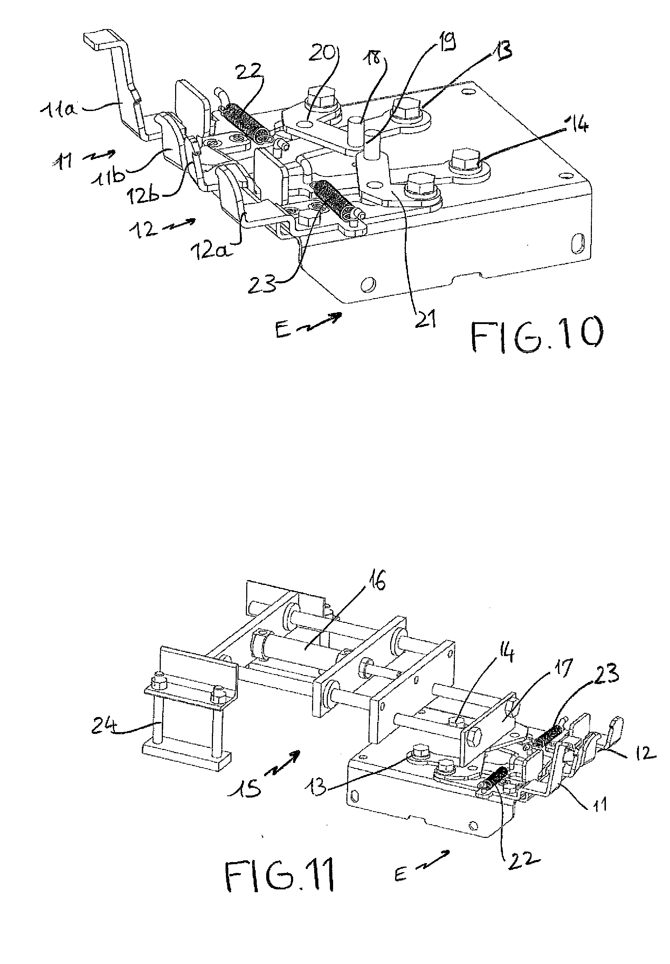

Comme indiqué, le convoyeur de la chaine d'abattage, est équipé d'une pluralité d'ensembles (E) conformés pour l'accrochage et le maintien en position ferme au niveau des tarses des différentes volailles transférées depuis le module (M) équipé d'une série de pinces (P). Comme le montre notamment la figure 10, chaque ensemble (E) présente deux mâchoires (11) et (12) pour correspondre aux deux tarses d'une volaille. Chaque mâchoire (11) et (12) présente un mors fixe (11a) et (12a) et un mors mobile (11b) et (12b). Les deux mors mobiles (11b) et (12b) sont assujettis à des moyens pour les maintenir en position ouverte. Ces deux mors (11b) et (12b) sont articulés à leurs extrémités libres, sur des axes (13) et (14). Les moyens de maintien en position ouverte des mors (11b) et (12b) sont constitués par un équipage mobile (15) asservi à un organe actionneur (16) sous forme par exemple d'un vérin. Cet équipage mobile (15) présente un tiroir (17) coopérant avec deux pions (18) et (19) portés par des biellettes (20) et (21) assujettis aux mors mobiles (11b) et (12b). Ce tiroir (17) provoque le déplacement angulaire des biellettes (20) et (21) correspondant à l'ouverture des mors (11b) et (12b) et à leur maintien dans cette position à l'encontre de ressorts de rappel (22) et (23). Ces ressorts de rappel (22) et (23) sont montés entre une partie du corps de l'ensemble (E) ou une partie des mors fixes (11a) et (12a) et chacun des mors mobiles (11b) et (12b).

Les ressorts (22) et (23) sont montés pour être comprimés au repos de sorte que lorsque les biellettes (20) et (21) sont libérées par le tiroir (17), lesdits ressorts permettent automatiquement et très rapidement de rappeler en position de fermeture, les mors mobiles (11b) et 12b).

En position ouverte des mâchoirs (11) et (12) maintenues dans cette position par le tiroir (17) de l'équipage mobile (15), les pinces (P), sur lesquelles sont accrochées les volailles au niveau de leurs tarses, sont avancées en direction des ensembles (E) puis ouvertes pour libérer les volailles et les disposer dans lesdites mâchoires qui sont immédiatement refermées sous l'effet du rappel des ressorts (22) et (23), suite à la libération des biellettes (20) et (21) sous l'effet du déplacement du tiroir (17). On peut noter que l'équipage mobile (15) est assujetti à un support fixe (24) monté sur une partie de la ligne de bridage en dehors du convoyeur.

Le fonctionnement est donc le suivant :
- Ejection d'une volaille de la ligne d'abattage éviscération, laquelle volaille est saisie par les pinces du module (M) ;
- Déplacement et révolution des pinces en position fermée correspondant à l'accrochage de la volaille au niveau des tarses, pour la positionner au niveau des ensembles (E) du convoyeur équipé des mâchoires (11) et (12) qui sont normalement ouvertes au repos ;
- Mise en place des tarses de la volaille dans les mâchoires qui sont immédiatement et très rapidement refermées sous l'effet conjugué du déplacement de l'ensemble mobile et de la détente des ressorts ;

L'invention trouve une application avantageuse dans le cas d'une installation de bridage comprenant :
- un convoyeur (C), recevant une pluralité d'ensembles (E) équipés des mâchoires (11) et (12) pour le maintien des volailles au niveau de leurs tarses ;
- au moins un équipage mobile (15) pour la commande en position d'ouverture et de fermeture des mâchoires (11) et (12);
- au moins un module de transfert (M) des volailles de la ligne d'abattage/éviscération dans les ensembles (E) équipés de mâchoires (1) et (2) ;
- des moyens de relevage des volailles en position sensiblement horizontale au fur et à mesure du déplacement du déplacement linéaire du convoyeur ;
- des moyens de compression des volailles ;
- un poste de bridage apte à disposer un élastique autour de la volaille en formant un huit ;
- des moyens d'éjection des volailles bridées.

Ces différents moyens ressortent par exemple de l'enseignement du brevet précité FR 2940596.

Avantageusement, le module (M) est composé de plusieurs ensembles de pinces (P).

Bien évidemment, l'ensemble de l'installation incluant la ligne d'abattage/éviscération et la chaine de bridage est assservi par tout moyen de commande convenablement programmé pour assurer la synchronisation et le fonctionnement des différentes étapes telles que décrites.

## Revendications

1. Dispositif de transfert d'une volaille entre une ligne d'abattage/éviscération et une chaine de bridage équipée d'une pluralité d'ensembles (E) assujettis à un convoyeur, **caractérisé en ce qu'**il comprend :
- au moins un module indépendant (M) équipé de pinces (P) aptes à saisir à la volée et à maintenir fermement au niveau des tarses, une volaille éjectée de la ligne d'abattage éviscération, ledit module (M) qui est fixe, étant positionné en relation avec la chaîne de bridage pour mettre en coopération les pinces avec la pluralité d'ensembles (E) comprenant des mâchoires (11) et (12) aptes à saisir la volaille au niveau des tarses,
- des moyens (8-9) aptes à déplacer les pinces en direction des mâchoires, tout en effectuant un mouvement de révolution de 180° de chacune des pinces,
- des moyens (4) aptes à ouvrir les pinces pour positionner les tarses de la volaille dans les mâchoires ouvertes (11) et (12) de l'ensemble considéré (E),
- des moyens (22-23) aptes à refermer les mâchoires (11) et (12) pour maintenir fermement les volailles au niveau des tarses pour les soumettre à d'autres opérations correspondant au bridage en tant que tel de ladite volaille.

2. Dispositif selon la revendication 1, **caractérisé en ce que** chaque pince (P) présente une partie fixe (1) et une partie mobile (2) montée avec capacité de pivotement angulaire en étant assujettie à un vérin (4) pour occuper une position d'ouverture ou de fermeture , par rapport à un tarse, correspondant à sa libération ou à son maintien.

3. Dispositif selon l'une quelconque des revendications 1 et 2, **caractérisé en ce que** deux pinces (P) sont montées sur une platine commune (6) pour correspondre aux deux tarses d'une volaille, lesdites pinces étant commandées simultanément en synchronisme.

4. Dispositif selon la revendication 3,
**caractérisé en ce que** chaque platine (6) équipée de deux pinces, est montée avec capacité de déplacement en translation et de révolution par rapport à un support fixe en étant assujettie à des organes actionneurs (8) et (9) pour être temporairement éloignée, puis rapprochée des mâchoires (11) (12) des ensembles assujettis au convoyeur.

5. Dispositif selon l'une quelconques des revendications 1-2,
**caractérisé en**
**ce que** le module indépendant (M) comprend au moins une platine (6) équipée de deux pinces (P), ledit module (M) comprend une structure support (10) conformée pour positionner la ou lesdite(s) platine(s) en regard des ensembles (E) assujettis au convoyeur.

6. Dispositif selon la revendication 5, **caractérisé en ce que** la structure support (10) du module comprend une zone d'appui (10a) coopérant avec une partie de la ligne de bridage et une zone d'appui (10b) coopérant avec le sol.

7. Dispositif selon la revendication 1, **caractérisé en ce que** chaque ensemble (E) assujetti au convoyeur, présente deux mâchoires (11) et (12) pour correspondre aux deux tarses d'une volaille, chaque mâchoire présentant un mors fixe (11a-12a) et un mors mobile (11b-12b), les deux mors mobiles étant assujettis à des moyens (15-20-21) pour les maintenir en position ouverte et à des moyens (22-23) pour les ramener rapidement en position fermée, après relâchement desdits moyens (15, 20, 21) de maintien en position ouverte.

8. Dispositif selon la revendication 7, **caractérisé en ce que** les moyens de maintien en position ouverte sont constitués par un équipage mobile (15) asservi à un organe actionneur (16), ledit équipage étant apte à coopérer avec deux biellettes (20) et (21) assujetties aux mors mobiles (11b) et (12b) des mâchoires pour provoquer le déplacement angulaire desdites biellettes correspondant à l'ouverture desdits mors et à leur maintien dans cette position à rencontre de ressorts de rappel (22) et (23).

9. Dispositif selon l'une quelconque des revendications 7 et 8, **caractérisé en ce que** les moyens pour ramener automatiquement et rapidement les mors mobiles(11b) et (12b) en position fermée, sont constitués par les ressorts de rappel (22) et (23) montés entre les mors fixes et les mors mobiles de chaque mâchoire, lesdits ressorts étant libérés lorsque l'équipage mobile (15) est commandé en sens inverse par l'organe actionneur (16).

10. Dispositif selon l'une quelconque des revendications 7-9, **caractérisé en ce que** l'équipage mobile (15) fait partie d'un support fixe monté sur une partie de la ligne de bridage, en dehors du convoyeur.

## Patentansprüche

1. Transfervorrichtung eines Geflügels zwischen einer Schlacht- / Ausnehmlinie und einem Einspannband, das mit einer Vielzahl von einem Förderband unterworfenen Gruppen (E) ausgerüstet ist, **dadurch gekennzeichnet, dass** es umfasst:
- wenigstens ein unabhängiges Modul (M), das mit Klemmen (P) ausgerüstet ist, die in der Lage sind, auf der Stelle ein Geflügel zu ergreifen und an den Fußwurzeln fest festzuhalten, das aus der Schlacht / Ausnehmlinie ausgestoßen wurde, wobei das genannte Modul (M), das fest ist, in Bezug auf das Einspannband positioniert ist, um die Klemmen mit der Vielzahl von Gruppen (E) zum Zusammenwirken zu bringen, umfassend Klemmbacken (11) und (12), die geeignet sind, das Geflügel an den Fußwurzeln zu ergreifen,
- Mittel (8-9), die geeignet sind, die Klemmen in Richtung der Klemmbacken zu versetzen und dabei gleichzeitig eine Revolutionsbewegung jeder Klemme um 180° auszuführen,
- Mittel (4), die geeignet sind, die Klemmen zu öffnen, um die Fußwurzeln des Geflügels in den offenen Klemmbacken (11) und (12) der betrachteten Gruppe (E) zu positionieren,
- Mittel (22-23), die geeignet sind, die Klemmbacken (11) und (12) zu verschließen, um das Geflügel an den Fußwurzeln fest festzuhalten, um es weiteren Operationen zu unterziehen, die dem Einspannen des genannten Geflügels als solches entsprechen.

2. Vorrichtung gemäß Anspruch 1, **dadurch gekennzeichnet, dass** jede Klemme (P) einen festen Teil (1) und einen mobilen Teil (2) aufweist, der mit einer Kapazität zum winkelförmigen Schwenken montiert ist und dabei einem Zylinder (4) unterworfen ist, um eine Öffnungs- oder Schließposition im Verhältnis zu einer Fußwurzel einzunehmen, die ihrer Freisetzung oder ihrem Festhalten entspricht.

3. Vorrichtung gemäß Anspruch 1 und 2, **dadurch gekennzeichnet, dass** zwei Klemmen (P) auf einer gemeinsamen Platine (6) montiert sind, um den zwei Fußwurzeln eines Geflügels zu entsprechen, wobei die genannten Klemmen simultan in Synchronisation gesteuert werden.

4. Vorrichtung gemäß Anspruch 3, **dadurch gekennzeichnet, dass** jede mit zwei Klemmen ausgerüstete Platine (6) mit einer Kapazität zur Versetzung in Translation und in Revolution im Verhältnis zu einem festen Träger montiert ist und Betätigungsorganen (8) und (9) unterworfen ist, um vorübergehend von den Klemmbacken (11) (12) der dem Förderband unterworfenen Gruppen entfernt und dann angenähert zu werden.

5. Vorrichtung gemäß Anspruch 1 oder 2, **dadurch gekennzeichnet, dass** das unabhängige Modell (M) wenigstens eine mit zwei Klemmen (P) ausgerüstete Platine (6) umfasst, wobei das genannte Modul (M) eine Trägerstruktur (10) umfasst, die angepasst ist, um die Platine oder Platinen gegenüber den dem Förderband unterworfenen Gruppen (E) zu positionieren.

6. Vorrichtung gemäß Anspruch 5, **dadurch gekennzeichnet, dass** die Trägerstruktur (10) des Moduls einen Stützbereich (10a) umfasst, der mit einem Teil der Einspannlinie zusammenwirkt, und einen Stützbereich (10b), der mit dem Boden zusammenwirkt.

7. Vorrichtung gemäß Anspruch 1, **dadurch gekennzeichnet, dass** jede dem Förderband unterworfene Gruppe (E) zwei Klemmbacken (11) und (12) aufweist, um zwei Fußwurzeln eines Geflügels zu entsprechen, wobei jede Klemmbacke einen feste Spannbackeneinsatz (11a-12a) und einen mobilen Spannbackeneinsatz (11b-12b) aufweist, wobei die zwei mobilen Spannbackeneinsätze Mitteln (15-20-21) unterworfen sind, um sie in offener Position zu halten, und Mitteln (22-23), um sie nach dem Loslassen der genannten Festhaltemittel (15, 20, 21) in offener Position rasch in die geschlossene Position zurückzubringen.

8. Vorrichtung gemäß Anspruch 7, **dadurch gekennzeichnet, dass** die Festhaltemittel in offener Position durch eine mobile Ausrüstung (15) gebildet sind, das von einem Betätigungsorgan (16) gesteuert wird, wobei die genannte Ausrüstung geeignet ist, mit zwei Hebeln (20) und (21) zusammenzuwirken, die den mobilen Spannbackeneinsätzen (11b) und (12b) der Spannbacken unterworfen sind, um die winkelförmige Verschiebung der genannten Hebel hervorzurufen, die der Öffnung der genannten Spannbackeneinsätze und ihrem Festhalten in dieser Position gegen Rückholfedern (22) und (23) entsprechen.

9. Vorrichtung gemäß Anspruch 7 und 8, **dadurch gekennzeichnet, dass** die Mittel zum automatischen und raschen Zurückholen der mobilen Spannbackeneinsätze (11b) und (12b) in die geschlossene Position durch Rückholfedern (22) und (23) gebildet sind, die zwischen den festen Spannbackeneinsätzen und den mobilen Spannbackeneinsätzen jeder Spannbacke montiert sind, wobei die genannten Federn freigesetzt werden, wenn die mobile Ausrüstung (15) in umgekehrter Richtung vom Betätigungsorgan (16) gesteuert wird.

10. Vorrichtung gemäß Anspruch 7-9, **dadurch gekennzeichnet, dass** die mobile Ausrüstung (15) zu einem festen Träger gehört, der auf einem Teil der Einspannlinie außerhalb des Förderbandes montiert ist.

## Claims

1. °/ Device for transferring poultry between a slaughter/evisceration line and a flanging chain fitted with several assemblies (E) connected to a conveyor, **characterized in that** it includes:
- at least one independent module (M) fitted with claws (P) that are suitable for holding on to moving birds ejected from the slaughtering/evisceration line at their tarsus; the said module (M) is fixed, being positioned in relation with the flanging chain to ensure the co-operation of the claws with several assemblies (E) including the jaws (11) and (12) which are suited to holding the bird at the tarsus,
- means (8-9) for moving the claws in the direction of the jaws, while also ensuring a 180° rotation of each claw,
- means (4) suited for opening the claws to position the tarsus of the bird in the open jaws (11) and (12) and the assembly in question (E),
- means (22-23) for closing the jaws (11) and (12) to firmly grip the birds at the tarsus to subject them to other operations corresponding to the flanging carried out on the bird in its current form.

2. °/ Device according to claim 1, **characterized in that** each claw (P) has a fixed part (1) and a moving part (2) mounted with a capacity for angular pivoting, controlled by a jack (4) to assume an open or closed position, for either releasing or holding a tarsus.

3. °/ Device according to one of the claims 1 and 2, **characterized in that** the two claws (P) are mounted on a common plate (6) to correspond to the two tarsus of a bird, and **in that** the said claws are controlled simultaneously and in a synchronous manner.

4. °/ Device according to claim 3, **characterized in that** each plate (6) is fitted with two claws and mounted with the capability of translational and rotational movement in relation to a fixed support and is controlled by actuating systems (8) and (9) and then temporarily moves away and then towards the jaws (11) and (12) of the assemblies connected to the conveyor.

5. °/ Device according to either of the claims 1-2, **characterized in that** the independent module (M) includes at least one plate (6), fitted with two claws (P), and the said module (M) includes a shaped support structure (10) to position the said plate(s) opposite the assemblies (E) connected to the conveyor.

6. °/ Device according to claim 5, **characterized in that** the support structure (10) of the module includes a support zone (10a) which cooperates with a part of the flanging line and a support zone (10b) which cooperates with the ground.

7. °/ Device according to claim 1, **characterized in that** each assembly (E), connected to the conveyor, has two jaws (11) and (12) that correspond to the two tarsi of a bird, each jaw having a fixed clamp (11a-12a) and a mobile clamp (11b-12b), both mobile clamps being connected to means (15-20-21) to maintain them in the open position and means (22-23) to quickly bring them to closed position after releasing the said means (15, 20, 21) of maintaining the clamps in the open position.

8. °/ Device according to claim 7, **characterized in that** the means of maintaining the clamps in the open position consist of mobile equipment (15) controlled by an actuating system (16), the said equipment being suited to co-operate with two small connecting rods (20) and (21) connected to the mobile clamps (11b) and (12b) of the jaws, which in turn cause the angular movement of the said connecting rods corresponding to the opening of the said clamps and also cause them to maintain this position when in contact with the return springs (22) and (23).

9. °/ Device according to either of the claims 7- 8, **characterized in that** the means to automatically and quickly return the mobile clamps (11b) and (12b) to the closed position consist of return springs (22) and (23) mounted between the fixed clamps and the mobile clamps of each jaw, the said springs being released when the mobile equipment (15) is moved in the opposite direction by the actuating system (16).

10. °/ Device in accordance with any of the claims 7-9, **characterized in that** the mobile equipment (15) is part of a fixed support mounted on a part of the flanging line, outside the conveyor.
